# EUROPÄISCHE PATENTSCHRIFT

(11) **EP 1 145 539 B1**
(45) Veröffentlichungstag und Bekanntmachung des Hinweises auf die Patenterteilung: **27.08.2003**
(21) Anmeldenummer: 99964600.3
(22) Anmeldetag: 17.12.1999
(51) Int. Cl.: H04N 1/407, H04N 1/60

(54) **VON EIGENSCHAFTEN DES DRUCKBILDTRÄGERS ABHÄNGIGE DRUCKVERFAHREN UND ZUGEHÖRIGE DRUCKGERÄTE**
PRINTING METHODS WHICH ARE DEPENDENT ON ATTRIBUTES OF THE PRINTED IMAGE SUPPORT, AND CORRESPONDING PRINTING DEVICES
PROCEDES D'IMPRESSION DEPENDANT DE PROPRIETES DU SUPPORT D'IMPRESSION ET DISPOSITIFS D'IMPRESSION CORRESPONDANTS

(30) Priorität: 21.12.1998 DE 19859138
(43) Veröffentlichungstag der Anmeldung: 17.10.2001
(73) Patentinhaber: Océ Printing Systems GmbH, 85586 Poing (DE)
(72) Erfinder: MAESS, Volkhard, D-85435 Erding (DE); SCHLEUSENER, Martin, D-85604 Zorneding (DE)
(74) Vertreter: Schaumburg, Thoenes & Thurn
(86) Internationale Anmeldenummer: EP9910082
(87) Internationale Veröffentlichungsnummer: WO00038408

(56) Entgegenhaltungen:
- EP-A- 0 660 589
- WO-A-97/37285
- WO-A-98/46008
- US-A- 5 774 146
- PATENT ABSTRACTS OF JAPAN vol. 1995, no. 09, 31. Oktober 1995 (1995-10-31) & JP 07 162695 A (CANON INC), 23. Juni 1995 (1995-06-23)
- PATENT ABSTRACTS OF JAPAN vol. 017, no. 147 (P-1508), 24. März 1993 (1993-03-24) & JP 04 318566 A (RICOH CO LTD), 10. November 1992 (1992-11-10)

## Beschreibung

Die Erfindung betrifft Druckverfahren, bei denen ein Druckbildträger, z.B. Papier, unter Verwendung von eingestellten und vorgegebenen Druckparametern bedruckt wird. Außerdem betrifft die Erfindung Druckgeräte bzw. Kopiergeräte zum Ausführen der Druck- bzw. Kopierverfahren. Die Druckgeräte werden unten näher erläutert.

Bekannt sind Druckverfahren, die beispielsweise nach dem elektrografischen, maghetografischen oder einem anderen nicht mechanischen Druckprinzip arbeiten. Bei einem elektrofotografischen Druckverfahren sind die Druckparameter u.a. das Aufladepotential des Fotoleiters, das Hilfspotential in der Entwicklerstation und andere physikalische Einstellgrößen, die den Druckprozeß beeinflussen.

Es ist bekannt, die Druckparameter abhängig von der Lichtempfindlichkeit, dem Alter oder der Temperatur eines beim Drukken verwendeten Fotoleiters einzustellen. Durch eine Regelung der Ist-Druckparameter wird erreicht, daß die einzustellenden vorgegebene Soll-Druckparameter auch bei Störungen eingehalten werden, z.B. bei schwankender Umgebungstemperatur oder veränderter Luftfeuchtigkeit, mit der Folge, daß die Druckbedingungen gleichbleiben. Jedoch hat sich gezeigt, daß selbst bei gleichen Druckbedingungen nicht in jedem Fall Druckbilder der gleichen hohen Druckqualität erzeugt werden.

Aus der japanischen Offenlegungsschrift JP-08-058081 A ist ein Tintenstrahldrucker bekannt, bei dem der Feuchtigkeitsgehalt des Druckbildträgers erfaßt wird. Abhängig vom erfaßten Feuchtigkeitsgehalt wird die zum Drucken verwendete Tintenmenge eingestellt, um ein "Ausfransen" des Druckbildes zu vermeiden.

In der japanischen Offenlegungsschrift JP-06-115061 A wird ein Tintenstrahldrucker beschrieben, bei dem die beim Drucken . verwendete Tintenmenge abhängig von der Saugfähigkeit des Papiers, der Durchlässigkeit oder der Oberflächentemperatur eingestellt werden soll. Ein Sensor erfaßt die Dicke des vollgesaugten Papiers elektronisch. Abhängig von der erfaßten Dicke werden Heizwiderstände angesteuert, die zum Ausstoß von Tintentröpfchen dienen.

In der deutschen Offenlegungsschrift DE 34 31 484 A1 ist ein Farb-Tintenstrahldrucker erläutert, bei dem mithilfe eines optischen Sensors zwischen Normalpapier und einer zu bedrukkenden durchsichtigen Folie unterschieden wird. Abhängig vom erfaßten Druckbildträger werden bei einer ersten Betriebsweise für Normalpapier weniger Druckpunkte je darzustellendem Bildelement erzeugt, als beim Bedrucken von Folie.

Die deutsche Patentschrift DE 40.17 850 C1 betrifft ein Verfahren und eine Vorrichtung zur Regelung der Strahlungsdosis von Laserstrahlung bei der Materialbearbeitung.

Die EP-A-0660589 beschreibt ein Verfahren gemäß dem Oberbegriff des Anspruchs 1. Bei einem ersten Ausführungsbeispiel ist eine Eingabeeinheit vorgesehen, in die manuell die Art des Aufzeichnungsträgers, beispielsweise normales Papier, Bondpaper, OHP-Blätter (overhead paper), glattes Papier (smooth paper) oder Recycling-Papier eingegeben wird. In weiteren Ausführungsbeispielen wird diese Eingabe automatisiert, indem ein optischer Sensor die Transmission, die Oberflächenkondition oder die Dicke des Aufzeichnungsträgers erfaßt und abhängig von den ermittelten Werten die Art des Aufzeichnungsträgers selbsttätig feststellt. Abhängig von der ermittelten Art des Aufzeichnungsträgers wird dann eine Optimierung des Druckvorgangs vorgenommen, indem der Belichtungspegel geändert wird. Weiterhin kann eine Anpassung im Hinblick auf den Farbton und die Farbsättigung erfolgen.

Aus Patent Abstracts of Japan vol. 1995, no. 09, 31. Oktober 1995 & JP 07 162695 A (Canon Inc), 23. Juni 1995 ist ein Farbbildprozessor bekannt, mit dessen Hilfe eine optimale Farbbalance durch Messen der spektroskopischen Eigenschaften eines Aufzeichnungsmaterials erreicht werden kann. Ein Sensor erfaßt das durch ein Aufzeichnungspapier hindurchgehende Licht. Ein RGB-Sensor mißt die Farbanteile eines Bildes einer Originalvorlage. Ein Computer führt eine RGB-Korrektur durch.

Die US-A-5,774,146 beschreibt ein Tintendruckverfahren mit farbiger Tinte, um ein mehrfarbiges Bild zu drucken. Ein Sensor erfaßt Oberflächenparameter, beispielsweise Reibungskoeffizienten, die Oberflächenrauhigkeit, die Lichtreflexion des Druckpapiers oder eine Kombination davon. Anhand der Sensorsignale werden dann die Art des verwendeten Papiers festgestellt und Druckparameter festgelegt.

Es ist Aufgabe der Erfindung, Druck- bzw. Kopierverfahren anzugeben, bei denen die Qualität der Druckbilder weiter verbessert wird. Weiterhin ist es Aufgabe der Erfindung Druckgeräte anzugeben, die Druckbilder hoher Druckqualität drucken.

Diese Aufgabe wird durch die Merkmale der Patentansprüche 1 und 9 gelöst. Weiterbildungen sind in den abhängigen Ansprüchen angegeben.

Die erfindungsgemäßen Verfahren gehen von der Erkenntnis aus, daß die Eigenschaften des zu bedruckenden Druckbildträgers den Druck wesentlich beeinflussen. Nur wenn die Einflüsse dieser Eigenschaften auf das Druckbild beim Druckvorgang berücksichtigt werden, lassen sich Druckbilder mit gleichbleibend hoher Druckqualität und mit gleichbleibendem Druckbildeindruck beim Betrachter auf Druckbildträgern mit unterschiedlichen Eigenschaften erzeugen. Deshalb wird beim erfindungsgemäßen Verfahren mindestens eine optische oder mechanische Eigenschaft des zu bedruckenden Druckbildträgers mit Hilfe eines Sensors erfaßt. Abhängig vom Sensorausgangssignal wird dann mindestens ein Druckparameter eingestellt. Durch diese Maßnahmen wird erreicht, daß Einflüsse der verwendeten Papierart, z.B. gelbliches, rauhes Umweltpapier anstelle von weißem, glattem Papier, auf die Druckqualität und damit auch auf den subjektive Eindruck beim Betrachter des Druckbildes berücksichtigt und ausgeglichen werden.

Beim Verfahren gemäß Patentanspruch 5 wird bei einem Druck mit Graustufen der Grauwert des Druckbildträgers durch einen Helligkeitssensor erfaßt. Außerdem wird mindestens ein das Erzeugen der Graustufen beeinflussender Druckparameter abhängig vom Ausgangssignal des Grauwertsensors eingestellt. Beispielsweise wird die Zahl der dargestellten Grauwerte bei einem sogenannten Multilevel-Zeichengenerator, wie er in der US-Patentschrift 5,767,888 erläutert wird, auch bei Druckbildträgern mit unterschiedlichem Grauwert dadurch unverändert beibehalten, daß die bestimmten Lichtcodierwerten zugeordneten Belichtungsenergien abhängig vom Ausgangssignal des Helligkeitssensors eingestellt werden. Dabei werden vorzugsweise zu bestimmten Ausgangssignalen des Helligkeitssensors gehörende Grau-Transformationsbeziehungen verwendet, die abhängig vom Grauwert die den Lichtcodierwerten zugeordneten Belichtungsenergien angeben. Durch das Verändern der Belichtungsenergien wird erreicht, daß unabhängig vom Grauwert des Druckbildträgers die gleiche Anzahl von Graustufen im Druckbild unterscheidbar bleibt, weil einer Veränderung der Grauwerte im Druckbild durch den Grauwert des Druckbildträgers entgegengewirkt wird. Insbesondere kann verhindert werden, daß bei dunklen Grauwerten eine Sättigung auftritt, welche Gebiete mit diesen Grauwerten schwarz erscheinen läßt. Auch die dunklen Grautöne bleiben somit sowohl meßtechnisch als auch beim Betrachten unterscheidbar.

Beim Verfahren gemäß Patentanspruch 6 wird beim Farbdruck der Farbort des Druckbildträgers mit Hilfe eines Farbsensor erfaßt. Anschließend werden die Soll-Farbdichten der zu drukkenden Farben mittels vorgegebener Farb-Transformationsbeziehungen ermittelt, welche den erfaßten Farborten Soll-Farbdichten zuordnen, die gewährleisten, daß trotz des von weiß abweichenden Farborts, im Druckbild Farben erzeugt werden, die den auf weißem Normalpapier zu erzeugenden Farben entsprechen. Auf einem farbigen Papier gedruckte Vollfarbbilder haben somit die gleiche Anzahl von Farben, die auf weißem Papier ohne die Korrektur entstehen würden. Beispielsweise werden die Farbdichten der vier Farbauszüge Gelb, Magenta, Zyan und Schwarz korrigiert. Ähnlich wie beim Grauwert führen Unterschiede im Farbort des Druckbildträgers zu einer veränderten Zahl von dargestellten Farbstufen, wenn einer Sättigung bei dunklen Farben nicht entgegen gewirkt wird. Die Unterschiede im Farbort des Druckbildträgers beeinflussen außerdem die Farbtönung des Druckbildes nicht, wenn die Farb-Transformationsbeziehungen geeignet gewählt werden.

Die Grau- und Farb-Transformationsbeziehungen werden in einer Weiterbildung vor dem Druckvorgang empirisch ermittelt und vorzugsweise als analytische Formeln oder als Tabelle in einem Speicher des Druckers bzw. Kopierers gespeichert. Beim empirischen Ermitteln der Transformationsbeziehungen werden die Korrekturen der Graustufen bzw. der Farbauszüge ausgewertet, die ein erfahrener Drucktechniker abhängig von der Helligkeit bzw. der Farbe des Papiers vornimmt.

Als wesentliche Eigenschaft des Druckbildträgers wird beim Verfahren gemäß Patentanspruch 7 die Rauhigkeit der Oberfläche des Druckbildträgers mit Hilfe eines Rauhigkeitssensors erfaßt. Abhängig vom Ausgangssignal des Rauhigkeitssensors wird die auf den Druckbildträger aufzutragende Tonermenge beeinflußt, indem z.B. bei einem elektrofotografischen Druckvorgang das Aufladepotential des Fotoleiters und/oder das Hilfspotential an der Entwicklungsstation angehoben bzw. abgesenkt werden. Durch diese Maßnahme wird erreicht, daß mehr oder weniger Tonerteilchen abgelagert werden, ohne die Grenzen der Pixel (Bildelemente) zu verändern. Werden die Grautöne beispielsweise mit Hilfe einer Rasterung erzeugt, so werden Einbrüche am Rand der Rasterfläche bei rauhem Papier durch einen stärkeren Tonerauftrag verhindert. Der als Verhältnis von bedeckter und unbedeckter Fläche definierte Grauwert bleibt unabhängig von der Rauhigkeit des Druckbildträgers konstant.

Als weitere Eigenschaft des Druckbildträgers wird beim Verfahren gemäß Patentanspruch 1 gemäß der Erfindung die Lichtstreuung des Druckbildträgers mittels eines optischen Sensors erfaßt. Lichtstreuung und Grauwert sind unterschiedliche Eigenschaften des Druckbildträgers. Arbeitet das Druckgerät beispielsweise mit einem Raster, um verschiedene Grautöne darzustellen, so wird die Lichtstreuung des Druckbildträgers z.B. dadurch erfaßt, daß auf den Druckbildträger eine Rastertonermarke aufgedruckt wird, bei der sich tonerfreie und tonerbedeckte Bereiche z.B. schachbrettmusterartig abwechseln. Nach dem Fixieren der Rastertonermarke in einer Fixierstation wird die Rastertonermarke mit Licht vorgegebener Stärke bestrahlt und das von der Rastertonermarke remittierte Licht mit dem optischen Sensor erfaßt. Der optische Sensor erfaßt einen Bereich der über die hellen und dunklen Bereiche der Rastertonermarke mittelt. Der Bereich wird so groß gewählt, daß statistische Schwankungen im Druckbild der Rastertonermarke das Erfassungsergebnis nicht verfälschen. Abhängig von der erfaßten Lichtmenge werden dann Druckparameter eingestellt, welche den Rastertonwert bzw. den Grauwert und/oder die Abmessung feiner Druckstrukturen festlegen, z.B. feiner Linien. Bei einem elektrofotografischen Druckvorgang wird beispielsweise das Aufladepotential des Fotoleiters bei gleichbleibendem Hilfspotential an der Entwicklerstation verändert. Das Raster in der Rastertonermarke hat beispielsweise eine Rasterung von 42 µm. Hat die Rastertonermarke eine Größe von etwa 1 cm², so läßt sich die Lichtstreuung des Druckbildträgers auf einfache Art erfassen, weil abhängig von den Streueigenschaften des Druckbildträgers mehr oder weniger Licht unter die bedeckten Tonerbereiche des Rasters gelangt und dort absorbiert wird.

Durch das Erfassen der Lichtmenge mithilfe einer Rastertonermarke wird auch der vom Druckbildträger und vom Tonerbild hervorgerufene Grauwert erfaßt. Da der Grauwert bzw. der Rastertonerwert auch von der Rauhigkeit, dem Grauwert bzw. dem Farbwert der Oberfläche des Papiers abhängen, lassen sich diese Eigenschaften des Trägermaterials indirekt berücksichtigen, wenn die Druckparameter abhängig von dem mit der Rastermarke ermittelten Rastertonwert eingestellt werden.

Die Rastertonermarke wird in einer Weiterbildung unter Verwendung von Druckparametern aufgebracht, die zuvor abhängig vom Grau- bzw. Farbort des Druckbildträgers und/oder abhängig von der Rauhigkeit des Druckbildträgers festgelegt worden sind. Bei dieser Vorgehensweise werden zuerst die das Druckbild und damit den Eindruck eines Betrachters am stärksten beeinflussenden Eigenschaften des Druckbildträgers berücksichtigt. Danach wird die Lichtstreuung berücksichtigt, die einen nicht zu vernachlässigenden Einfluß auf das Druckbild hat.

Die Erfindung betrifft außerdem Druck- bzw. Kopiergeräte, die insbesondere zum Durchführen der erfindungsgemäßen Verfahren oder deren Weiterbildungen verwendet werden. Es gelten die oben genannten technischen Wirkungen auch für die Druck- bzw. Kopiergeräte.

Im folgenden werden Ausführungsbeispiele der Erfindung an Hand der beiliegenden Zeichnungen erläutert. Darin zeigen:
- Figur 1: eine Prinzipdarstellung eines Druckgeräts,
- Figur 2: ein Flußdiagramm für ein papierabhängiges Farbdruckverfahren, und
- Figur 3: ein Flußdiagramm für ein papierabhängiges SchwarzWeiß-Druckverfahren, und
- Figur 4: ein Diagramm zur Darstellung verschiedener Prozeßcharakteristiken.

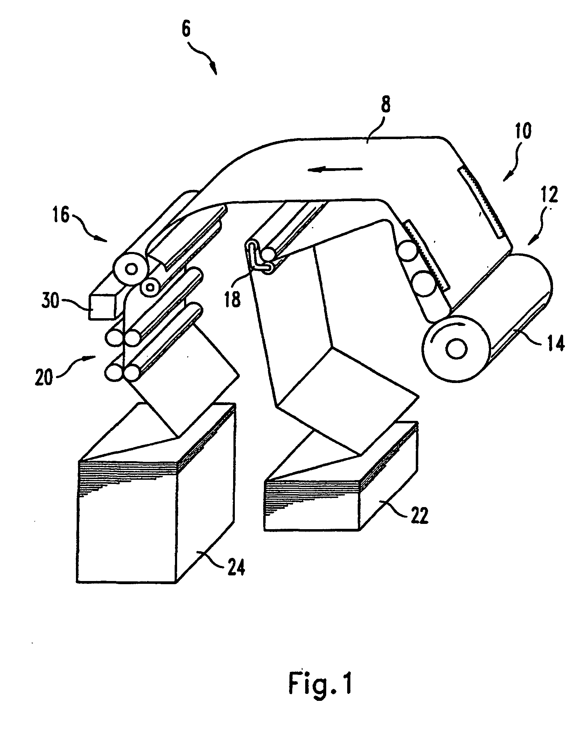

Figur 1 zeigt eine Prinzipdarstellung eines Hochleistungs-Druckgeräts 6. Das Druckgerät 6 hat eine Transportvorrichtung 10, die nahe einer Umdruckstation 12 angeordnet ist und Endlos-Trägermaterial durch die Umdruckstation 12 fördert, in der das auf einer Fotoleitertrommel 14 aufgebrachte, mit Toner eingefärbte Ladungsbild mittels einer Koronaeinrichtung (nicht dargestellt) auf das Trägermaterial übertragen wird. Anschließend wird das Endlos-Trägermaterial einer Fixierstation 16 zugeführt, in der das noch verwischbare Tonerbild mit Hilfe von Druck und Temperatur wischfest mit dem Trägermaterial verbunden wird. In der durch einen Pfeil angedeuteten Transportrichtung gesehen vor der Umdruckstation 12 ist eine erste Umlenkeinheit 18 angeordnet, die das Endlos-Trägermaterial der Umdruckstation 12 zuleitet und entsprechend der ausgewählten Druckart das Endlos-Trägermaterial wenden oder auch nur seitlich versetzen kann. Eine zweite Umlenkeinheit 20 ist in Transportrichtung gesehen nach der Fixierstation 16 angeordnet. Diese zweite Umlenkeinheit 20 stapelt das bedruckte Endlos-Trägermaterial und kann, gleichfalls abhängig von der gewählten Druckart, das Material außerdem der ersten Umlenkeinheit 18 zuführen.

Figur 1 zeigt den Drucker 6 in einer ersten Druckart, dem Simplexbetrieb, bei dem ein Bahnabschnitt 8 des Endlos-Trägermaterials von einem Stapel 22 durch die erste Umlenkeinheit 18 der Druckeinheit 12 zugeführt wird. nach dem Bedrukken transportiert die Transportvorrichtung 10 den Bahnabschnitt 8 in Richtung der Fixierstation 16, in der das Tonerbild fest mit dem Endlos-Trägermaterial verbunden wird. Anschließend stapelt die zweite Umlenkeinheit 20 den Bahnabschnitt 8 auf einem zweiten Stapel 24 auf.

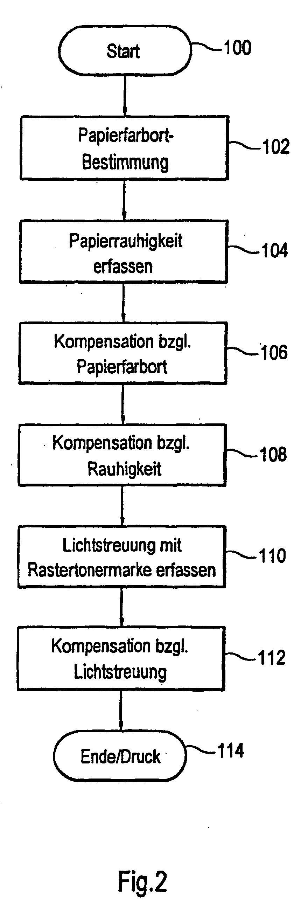

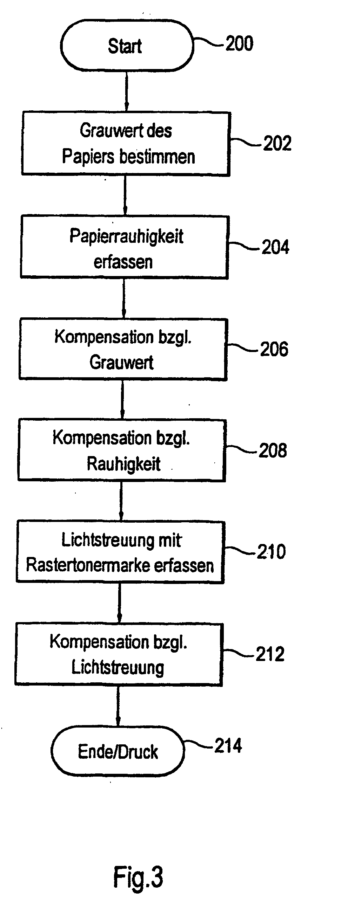

Das Druckgerät 6 enthält außerdem eine Sensoreinheit 30, die zwischen der Fixierstation 16 und der Umlenkeinheit 20 angeordnet ist. Die Sensoreinheit 30 enthält mehrere Sensoren zum Erfassen der Eigenschaften des Endlos-Trägermaterials, d.h. des Endlos-Papiers. Die einzelnen Sensoren werden im folgenden im Zusammenhang mit den Figuren 2 und 3 erläutert.

Figur 2 zeigt ein Flußdiagramm für ein von Eigenschaften des Papiers abhängiges Farb-Druckverfahren, welches in einem Schritt 100 beginnt, nachdem das Papier gewechselt worden ist. In einem folgenden Schritt 102 wird mit einem Farbsensor der Farbort des Papiers erfaßt. Dies erfolgt mit einem der Geräte der Firma X-Rite aus Grandville, Michigan, USA, wie sie in deren Prospekten "The Colour Guide and Glossary" (1996) und "A Guide to understanding Colour Communication" (1993) beschrieben sind. Der Farbort wird gemäß der in den Prospekten erwähnten, von der CIE (Commission International de l'Eclairage) empfohlenen Farbnorm CIE 1976 (L*a*b*) festgelegt, auch CIELAB genannt.

Im folgenden Verfahrensschritt 104 wird die Rauhigkeit des zu bedruckenden Papiers mit einem marktüblichen Rauhigkeitssensor erfaßt, z.B. einem Papierrauhigkeitssensor nach Bendtsen. Die Rauhigkeit wird bei diesem Verfahren dadurch bestimmt, daß Luft mittels eines auf dem Papier aufgelegten, hohlen Sensorringes angesaugt wird, der an der auf dem Papier aufliegenden Fläche Lufteintrittslöcher hat. Die angesaugte Luftmenge in ml/min ist dann ein Maß für die Rauhigkeit des Papiers.

Danach wird in einem Verfahrensschritt 106 eine Kompensation bezüglich des Papierfarbortes durchgeführt, falls der im Verfahrensschritt 102 ermittelte Papierfarbort von einem vorgegebenen Bezugsfarbort abweicht. Bei dem an Hand der Figur 2 erläuterten Druckverfahren werden in einem elektrofotografischen Drucker die Farbauszüge Gelb, Magenta, Zyan und Schwarz verwendet. Im Schritt 106 wird zu dem Papierfarbort des zu bedruckenden Papiers eine Farbtransformationskurve ausgewählt, mit der Korrekturfaktoren bestimmt werden, um Bezugsfarbdichten für die vier Farbauszüge zu korrigieren. Die korrigierten Farbdichten werden für den Druckvorgang als SollWerte für eine Farbauszugsdichteregelung gespeichert.

In einem Verfahrensschritt 108 wird danach der Einfluß der Rauhigkeit des Papiers ausgeglichen, falls die im Verfahrensschritt 104 ermittelte Rauhigkeit von einer Bezugsrauhigkeit abweicht. Als Bezugsrauhigkeit wird die Rauhigkeit von glattem Papier verwendet, d.h. Papier mit einem Rauhigkeitswert nach Bendtsen kleiner als 100 ml/min. Bei glatter Papieroberfläche wird für eine bestimmte Einfärbung weniger Toner pro Fläche benötigt, als bei rauhem Papier. Deshalb werden zur Kompensation der Rauhigkeit im Verfahrensschritt 108 abhängig vom Rauhigkeitswert gleichzeitig das Aufladepotential des Fotoleiters und das Hilfspotential in der Entwicklungsstation verändert. Durch diese Maßnahme wird erreicht, daß je Pixelfläche mehr Tonermaterial abgelagert wird, die jeweilige Zeichen- oder Rasterkontur aber nicht verändert wird. Das im Verfahrensschritt 108 ermittelte Aufladepotential VC des Fotoleiters und das Hilfspotential VBias werden in einem Speicher des Druckgeräts 6 gespeichert.

In einem Verfahrensschritt 110 wird die Lichtstreuung des zu bedruckenden Papiers erfaßt. Dazu wird eine Rastertonermarke auf das Papier gedruckt, wobei die in den Verfahrensschritten 106 und 108 ermittelten Druckparameter verwendet werden. Die Rastertonermarke wird vorzugsweise nach dem Fixieren in einer Fixierstation mit einer Lichtquelle bestrahlt. Das von der Rastertonermarke reflektierte Licht wird mit einem integrierend arbeitenden Lichtsensor erfaßt. Beim Verwenden eines Bezugspapiers wird ein Bezugswert DZ der Lichtstreuung erfaßt.

Bei einem Papier, dessen Lichtstreueigenschaften von denen des Bezugspapiers abweichen, wird bei sonst gleicher Tonerverteilung auf dem Papier ein vom Bezugswert DZ abweichender Lichtstreuwert D erfaßt.

In einem Verfahrensschritt 112 wird der Einfluß der Lichtstreuung des Papiers auf das Druckbild ausgeglichen, falls der im Verfahrensschritt 110 erfaßte Lichtstreuwert D von dem Bezugswert DZ abweicht. Die Kompensation erfolgt, indem das Aufladepotential VC des Fotoleiters bei unverändertem Hilfspotential VBias verändert wird. Verändert werden somit Druckparameter, die den Rastertonwert der Bilder und die Abmessungen feiner Druckstrukturen bestimmen, wie z.B. die Linienbreite. Auf dem jeweils verwendeten Papier entsteht ein Druckbild, das einem unter Standardbedingungen auf das Bezugspapier gedruckten Druckbild entspricht. Ist der Lichtstreuwert kleiner als die Bezugswert DZ, dann werden die Druckparameter so variiert, daß der Rastertonwert und die Detailabmessungen vergrößert werden. Beispielsweise wird das Aufladepotential VC bei unverändertem Hilfspotential VBias abgesenkt.

In einem Verfahrensschritt 114 wird das Verfahren zum Ermitteln der Druckparameter abhängig vom Papier beendet. Die ermittelten Druckparameter werden dann in den folgenden Druckvorgängen beibehalten.

Figur 3 zeigt ein Flußdiagramm für ein papierabhängiges Schwarz-Weiß-Druckverfahren. Das Verfahren beginnt in einem Schritt 200.

In einem Verfahrensschritt 202 wird mit einem Helligkeitssensor der Grauwert des zu bedruckenden Papiers erfaßt. Gleichzeitig oder danach wird in einem Verfahrensschritt 204 die Papierrauhigkeit erfaßt, wie oben bereits für den Verfahrensschritt 104 erläutert. Anschließend wird in einem Verfahrensschritt 206 der Einfluß des Grauwertes des Papiers auf das Druckbild ausgeglichen. Dabei wird berücksichtigt, daß bei nicht weißem Papier die Grauwerte im Druckbild im Vergleich zu denselben Grauwerten auf weißem Papier insgesamt zu höheren Werten verschoben werden. Das auf nicht weißem Papier gedruckte Schwarz-Weiß-Druckbild wird einem auf weißem Papier gedruckten Druckbild dadurch angepaßt, daß Parameter des Druckprozesses so verändert werden, daß die gleiche Anzahl von Graustufen unterscheidbar bleibt. Im Ausführungsbeispiel wird für den Druck ein Multilevel-Zeichengenerator verwendet, der beispielsweise in der US-Patentschrift 5,767,888 erläutert ist. Die Gesamtprozeßkennlinie des Druckprozesses wird verformt, indem den Lichtcodierwerten des Multileyel-Zeichengenerators korrigierte Belichtungsenergien zugeordnet werden. Dies erfolgt entweder für jeden Lichtcodierwert einzeln oder für alle Lichtcodierwerte im gleichen Verhältnis. Die korrigierten Belichtungsenergien werden für die weiteren Druckprozesse gespeichert.

In einem Verfahrensschritt 208 wird der Einfluß der Rauhigkeit des Papiers so berücksichtigt, wie es oben für den Verfahrensschritt 108 erläutert worden ist. Im Verfahrensschritt 210 wird die Lichtstreuung des Papiers unter Verwendung einer Rastertonermarke erfaßt, die auf das Papier mit den in den Verfahrensschritten 206 und 208 ermittelten Druckparametern aufgedruckt wird. Im Verfahrensschritt 212 erfolgt die Kompensation des Einflusses der Lichtstreuung des Papiers auf das Druckbild, wie oben für den Verfahrensschritt 112 erläutert. Im Verfahrensschritt 214 wird das Verfahren beendet.

In weiteren, nicht dargestellten Ausführungsbeispielen werden die an Hand der Figuren 2 und 3 erläuterten Verfahren auch nach dem Einschalten des Druckgeräts 6 durchgeführt. Durch diese Maßnahme können auch die Eigenschaften von Papier berücksichtigt werden, das bei ausgeschalteten Druckgerät 6 eingelegt worden ist.

Bei allen erläuterten Verfahren wird das Verwenden eines zusätzlichen Blattes vermieden, wenn die Lichtstreuung ohne Rastertonermarke ermittelt wird. Die erläuterten Verfahren werden dann vor dem Bedrucken des ersten Papierblattes durchgeführt. Die dabei ermittelten Druckparameter werden dann bereits beim Aufbringen des Druckbildes auf das erste Blatt verwendet.

Bei den anhand der Figuren 1 bis 3 erläuterten Verfahren werden Oberflächeneigenschaften des zu druckenden Druckbildträgers erfaßt. Sensoren und Empfänger befinden sich vorzugsweise auf einer Seite des zu bedruckenden Druckbildträgers. So ist die in Figur 1 dargestellte Sensoreinheit 30 der zu bedruckenden Druckseite des Bahnabschnitts gegenüberliegend angeordnet. Entweder werden also mechanische oder optische Oberflächeneigenschaften des Druckbildträgers erfaßt. Die optischen Eigenschaften hängen eng mit der Lichtremission zusammen, d.h. mit dem von der Oberfläche zurückgeworfenen Licht. Die Lichtremission wird wesentlich durch die reflektierte Strahlung, die am Druckbildträger zurückgestreute Strahlung und die Farbzusammensetzung des remettierten Lichtes bestimmt.

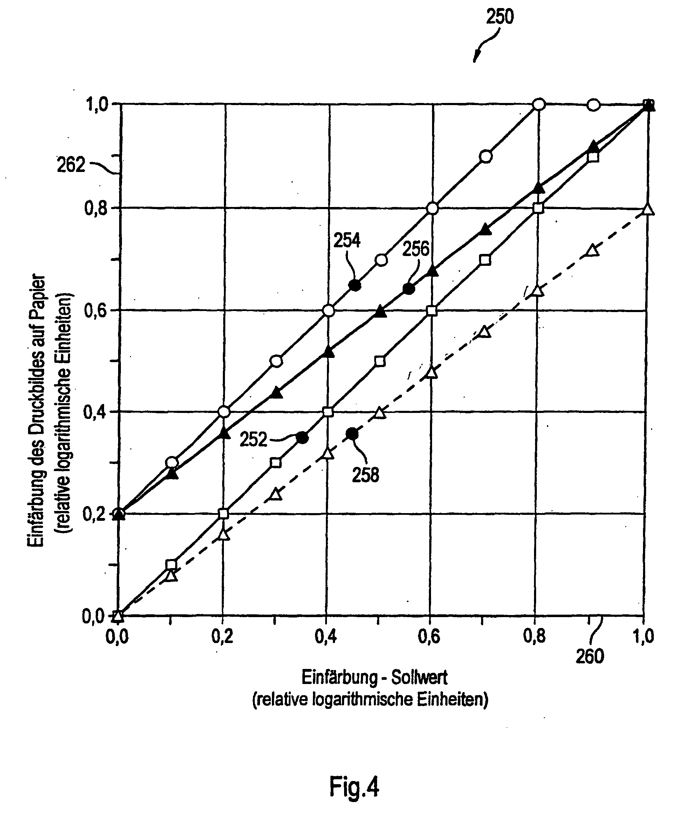

Figur 4 zeigt ein Diagramm 250 zur Darstellung verschiedener Prozeßcharakteristiken 252 bis 258. Auf der x-Achse 260 sind die Sollwerte für die Einfärbung abgetragen. Auf der y-Achse 262 sind die Ist-Werte für die Einfärbung des auf dem Druckbildträger, z.B. dem Papier, aufgedruckten Druckbildes dargestellt. Die auf der x-Achse 260 bzw. auf der y-Achse 262 dargestellten Zahlenwerte sind einheitenlos, da es sich um relative logarithmische Einheiten handelt. Bei der Verwendung von Papier mit einem Soll-Weiß, bei dem alle Farben zu 100 % reflektiert werden würden, führt ein optimal eingestellter Druckprozeß zur Prozeßcharakteristik 252. Die Prozeßcharakteristik 252 beginnt im Nullpunkt des in Figur 4 dargestellten Diagramms 250 und endet im Schnittpunkt des x-Wertes 1,0 und des y-Wertes 1,0. Zwischen Anfangs- und Endpunkt ist die Prozeßcharakteristik 252 linear.

Wird Papier verwendet, das einen Grauwert bzw. eine Farbe hat, die vom Soll-Weiß abweicht, so haben unbedruckte Bereiche bereits die Einfärbung 0,2. Die Einfärbung entspricht einem bestimmten Grauwert. Außerdem wird die Prozeßcharakteristik 252 zu höheren Einfärbungen des Papiers hin verschoben, dargestellt durch die Prozeßcharakteristik 254. Auch die anderen Papiereigenschaften, wie Rauhigkeit und Lichtstreu-Verhalten beeinflussen den auf dem Papier entstehenden Grauwert. Bei der Prozeßcharakteristik 252 erscheinen alle Bildbereiche mit Soll-Grauwerten oberhalb von 0,8 schwarz. In diesem Bereich tritt eine Sättigung auf und Grauwerte in diesem Bereich sind nicht voneinander unterscheidbar. Für eine bestmögliche Bildwiedergabe müssen alle im Bild wiederzugebenden Grauwerte gleichmäßig über den verfügbaren Bereich von 0,2 bis 1,0 verteilt werden. Dazu ist eine Prozeßcharakteristik erforderlich, wie sie durch die Prozeßcharakteristik 256 in Figur 4 dargestellt ist. Ein gemäß Prozeßcharakteristik 256 eingestellter Druckprozeß ergibt beim Druck auf Papier mit Soll-Weiß die Prozeßcharakteristik 258, die zur Prozeßcharakteristik 256 so verschoben ist, daß sie im Ursprung des Diagramms 250 beginnt und im Schnittpunkt des x-Wertes 1,0 und des y-Wertes 0,8 endet. Wird das gleiche Tonerbild auf Papier gedruckt, das vom Soll-Weiß abweicht, so überlagern sich z.B. beim Schwarz-Weiß-Druck die Grauwerte von Papier und Tonerbild. Durch die Überlagerung entsteht die Prozeßcharakteristik 258.

Korrekturwerte für bestimmte Prozeßparameter des Druckprozesses werden bei einem Ausführungsbeispiel so ermittelt, daß in einem ersten Verfahrensabschnitt zunächst mit einem vorgegebenen Druckprozeß, z.B. mit dem Druckprozeß für Papier der Farbe Soll-Weiß, eine Anzahl von Grauwert-Rastermarken auf das zu verwendende Papiergedruckt werden. Anschließend werden mit einem Helligkeitssensor die erzielten Rastermarken-Grauwerte auf dem Papier sowie der Grauwert des unbedruckten Papiers erfaßt. Mithilfe der erfaßten Werte, die in Figur 4 durch Kreise auf der Prozeßcharakteristik 254 dargestellt sind, lassen sich die Korrekturwerte für die Druckprozeß-Parameter ermitteln. Anschließend werden die korrigierten Parameter für das weitere Druckverfahren in einer Steuereinheit des Druckers, des Druckgerätes 6, gespeichert.

Einige Möglichkeiten zur Beeinflussung des elektrofotografischen Druckprozesses sind in den folgenden Patentdokumenten angegeben:
- DE 198 59 140, mit mindestens drei Helligkeitsstufen arbeitende Druckvorrichtungen sowie damit auszuführende Verfahren zum Festlegen von Druckparametern, insbesondere die in Figur 6 dieses Patentdokumentes dargestellten Zusammenhänge,
- DE 198 59 094, Verfahren zum Drucken mit einem Multilevel-Zeichengenerator sowie Druckvorrichtung, als Beispiel für die Ermittlung von Korrekturfaktoren, mit denen eine vorgegebene Kennlinie erreicht werden kann,
- DE 198 59 93, Verfahren zum verbesserten elektrografischen Druck von Bilddetails sowie nach diesem Verfahren arbeitendes Druckgerät, als Beispiel für die Korrektur der Aufladung des Fotoleiters durch veränderte Belichtungsenergien, und
- DE 196 12 637, Verfahren zum Optimieren einer Ladungsbilderzeugung.

Die in den genannten Anmeldungen angegebenen Möglichkeiten zur Beeinflussung des Druckprozesses sind außerdem in den auf diesen Anmeldungen beruhenden Nachanmeldungen angegeben.

Das Ermitteln der Korrekturwerte wird in mehreren Abgleichschritten durchgeführt, um die Ziel-Charakteristik, vgl. z.B. die Prozeßcharakteristik 258, besser anzunähern. Die Anzahl der Grauwert-Rastermarken wird so gewählt, daß eine ausreichende Annäherung an die Zielcharakteristik mit einem vertretbaren Erfassungs- und Rechenaufwand erreicht werden kann. Nicht erfaßte Grauwerte lassen sich durch Interpolationen ermitteln. Im einfachsten Fall kann eine Prozeßanpassung auch ohne Testdruck von Raster-Grauwerten und ohne Erfassen des Grauwerts dieser Raster-Marken erfolgen. Dazu wird mit dem Helligkeitssensor nur der Grauwert des unbedruckten Papiers gemessen. Aus diesem Meßwert werden dann die Prozeßparameter-Korrekturen ermittelt.

Der Abgleich für den Farbdruck erfolgt ähnlich wie beim Schwarz/Weiß-Druck. So werden nacheinander die Teilprozesse der zum Farbdruck benötigten Farbauszüge an die Papiereigenschaften angepaßt, d.h. z.B. für Farbauszüge der Farben Gelb, Magenta, Cyan und Schwarz. Anstelle des Helligkeitssensors zur Messung der Grauwerte der Rastermarken und des unbedruckten Papiers wird beim Farbdruck ein Farbsensor zur Messung der Einfärbungswerte der Raster-Marken und des Papiers verwendet, vgl. beispielsweise die oben genannten Farbsensoren der Firma X-Rite.

Der Abgleichprozeß beim Farbdruck kann vereinfacht werden, indem insbesondere bei nicht allzu hohen Qualitätsanforderungen, der Abgleich von einem oder von mehreren Teilprozessen entfällt. Beispielsweise wird nur der Farbauszug für Schwarz und eine weitere Farbe abgeglichen, wenn nur ein sogenannter Highlightcolor-Druck ausgeführt werden soll.

### Bezugszeichenliste

- 6: Druckgerät
- 8: Bahnabschnitt
- 10: Transportvorrichtung
- 12: Umdruckstation
- 14: Fotoleitertrommel
- 16: Fixierstation
- 18, 20: Umlenkeinheit
- 22, 24: Stapel
- 30: Sensoreinheit
- 100: Start
- 102: Papierfarbort-Bestimmung
- 104: Papierrauhigkeit erfassen
- 106: Kompensation bezüglich Papierfarbort
- 108: Kompensation bezüglich Rauhigkeit
- 110: Lichtstreuung mit Rastertonermarke erfassen
- 112: Kompensation bezüglich Lichtstreuung
- 114: Ende/Druck
- 200: Start
- 202: Grauwert des Papiers bestimmen
- 204: Papierrauhigkeit erfassen
- 206: Kompensation bezüglich Grauwert
- 208: Kompensation bezüglich Rauhigkeit
- 210: Lichtstreuung mit Rastertonermarke erfassen
- 212: Kompensation bezüglich Lichtstreuung
- 214: Ende/Druck
- 250: Diagramm
- 252 bis 258: Prozeßcharakteristik
- 260: x-Achse
- 262: y-Achse
- D: Lichtstreuwert
- DZ: Bezugswert der Lichtstreuung
- VC: Aufladepotential des Fotoleiters
- VBias: Hilfspotential an der Entwicklerstation

## Patentansprüche

1. Verfahren zum Betreiben eines Druck- oder Kopiergeräts (6),
bei dem mindestens eine optische Eigenschaft des mit einem Druckbild zu bedruckenden Druckbildträgers (8) durch einen Sensor (30) erfasst wird (Schritte 102, 104, 110),
abhängig vom Sensorausgangssignal des Sensors (30) mindestens ein Druckparameter eingestellt wird (Schritte 106, 108, 112),
und bei dem der Druckbildträger (8) in einem Druckvorgang unter Verwendung des eingestellten Druckparameters bedruckt wird (Schritt 114),
**dadurch gekennzeichnet, dass** die Lichtstreuung der Oberfläche des Druckbildträgers mit dem optischen Sensor erfasst wird (Schritte 110, 210),
dass abhängig von der erfassten Lichtstreuung Druckparameter vorgegeben werden, welche den Rastertonwert oder den Grauwert und/oder die Abmessungen feiner Druckdetails festlegen (Schritte 112, 212),
dass eine Rastertonermarke auf den Druckbildträger aufgedruckt wird,
und dass das im Bereich der Rastertonermarke reflektierte, rückgestreute Licht mit dem optischen Sensor erfasst wird.

2. Verfahren nach Anspruch 1, **dadurch gekennzeichnet, dass** die Rastertonermarke unter Verwendung von Druckparametern aufgebracht wird, die zuvor abhängig vom Grauwert oder Farbort des Druckbildträgers festgelegt worden sind.

3. Verfahren nach einem der vorhergehenden Ansprüche 1 bis 2, **dadurch gekennzeichnet, dass** es in einem elektrofotografischen Drucker ausgeführt wird.

4. Verfahren nach einem der vorhergehenden Ansprüche, **dadurch gekennzeichnet, dass** als Druckparameter die Belichtungsenergie einer Belichtungseinrichtung zum Belichten eines lichtempfindlichen Elements, ein Hilfspotential in einer Entwicklereinheit zum Aufbringen von Tonerteilchen und/oder das Aufladepotential des lichtempfindlichen Elements verwendet werden.

5. Verfahren nach einem der vorhergehenden Ansprüche, **dadurch gekennzeichnet, dass** bei einem Schwarz-Weiß-Druck mit Graustufen der Grauwert des Druckbildträgers mit Hilfe eines Helligkeitssensors erfasst wird (Schritt 202),
dass mindestens ein das Erzeugen der Graustufen beeinflussender Druckparameter abhängig vom Ausgangssignal des Grauwertsensors eingestellt wird (Schritt 206),
dass ein Multilevel-Zeichengenerator beim Belichten eines Fotoleiters in einem elektrografischen Druck- oder Kopiergerät (16) verwendet wird,
und dass die bestimmten Lichtcodierwerten zugeordneten Belichtungsenergien des Zeichengenerators abhängig vom Sensorausgangssignal eingestellt werden (Schritt 206),
wobei vorzugsweise zu bestimmten Sensorausgangssignalen gehörende Grau-Transformationsbeziehungen verwendet werden, die abhängig vom Grauwert, die den Lichtcodierwerten zugeordneten Belichtungsenergien angeben.

6. Verfahren nach einem der vorhergehenden Ansprüche 1 bis 4, **dadurch gekennzeichnet, dass** bei einem Farbdruck der Farbort des Druckbildträgers mit Hilfe eines Farbsensors erfasst wird (Schritt 102),
dass die Soll-Farbdichten der zu druckenden Farben mittels vorgegebener Farb-Transformationsbeziehungen ermittelt werden, welche den erfassten Farborten Soll-Farbdichten für die beim Druck verwendeten Farbauszüge zuordnen (Schritt 106),
dass die Transformationsbeziehungen vor dem Druckvorgang empirisch ermittelt,
und als analytische Formeln oder als Tabelle in einem Speicher des Druck- bzw. Kopiergeräts (6) gespeichert werden.

7. Verfahren nach einem der vorhergehenden Ansprüche 1 bis 6, **dadurch gekennzeichnet, dass** die Rauhigkeit der Oberfläche des Druckbildträgers mit einem Rauhigkeitssensor erfasst wird (Schritte 104, 204),
dass abhängig vom Ausgangssignal des Rauhigkeitssensors die auf den Druckbildträger aufzutragende Tonermenge eingestellt wird (Schritte 108, 208), wobei gleichzeitig das Aufladepotential eines beim Druckvorgang mitwirkenden Fotoleiters und das Hilfspotential einer zugeordneten Entwicklungsstation verändert wird.

8. Verfahren nach Anspruch 7, **dadurch gekennzeichnet, dass** die Druckparameter so verändert werden, dass die Größe der Bildelemente des Druckbildes auf dem Druckbildträger etwa gleich bleibt.

9. Einrichtung zum Betreiben eines Druck- oder Kopiergeräts (6),
bei dem mindestens eine optische Eigenschaft des mit einem Druckbild zu bedruckenden Druckbildträgers (8) durch einen Sensor (30) erfasst wird (Schritte 102, 104, 110),
abhängig vom Sensorausgangssignal des Sensors (30) mindestens ein Druckparameter eingestellt wird (Schritte 106, 108, 112),
und bei dem der Druckbildträger (8) in einem Druckvorgang unter Verwendung des eingestellten Druckparameters bedruckt wird (Schritt 114),
**dadurch gekennzeichnet, dass** die Lichtstreuung der Oberfläche des Druckbildträgers mit dem optischen Sensor erfasst wird (Schritte 110, 210),
dass Mittel vorgesehen sind, durch die abhängig von der erfassten Lichtstreuung Druckparameter vorgegeben werden, welche den Rastertonwert oder den Grauwert und/oder die Abmessungen feiner Druckdetails festlegen (Schritte 112, 212),
eine Rastertonermarke auf den Druckbildträger aufgedruckt wird,
wobei das im Bereich der Rastertonermarke reflektierte, rückgestreute Licht mit dem optischen Sensor erfasst wird.

10. Einrichtung nach Anspruch 9, **dadurch gekennzeichnet, dass** die Rastertonermarke unter Verwendung von Druckparametern aufgebracht wird, die zuvor abhängig vom Grauwert oder Farbort des Druckbildträgers festgelegt worden sind.

11. Einrichtung nach einem der vorhergehenden Ansprüche 9 oder 10, **dadurch gekennzeichnet, dass** es in einem elektrofotografischen Drucker einsetzbar ist.

12. Einrichtung nach einem der vorhergehenden Ansprüche 9-11, **dadurch gekennzeichnet, dass** als Druckparameter die Belichtungsenergie einer Belichtungseinrichtung zum Belichten eines lichtempfindlichen Elements, ein Hilfspotential in einer Entwicklereinheit zum Aufbringen von Tonerteilchen und/oder das Aufladepotential des lichtempfindlichen Elements verwendet werden.

13. Einrichtung nach einem der vorhergehenden Ansprüche 9-12, **dadurch gekennzeichnet, dass** Mittel vorgesehen sind, durch die bei einem Schwarz-Weiß-Druck mit Graustufen der Grauwert des Druckbildträgers mit Hilfe eines Helligkeitssensors erfasst wird (Schritt 202),
mindestens ein das Erzeugen der Graustufen beeinflussender Druckparameter abhängig vom Ausgangssignal des Grauwertsensors eingestellt wird (Schritt 206),
wobei ein Multilevel-Zeichengenerator beim Belichten eines Fotoleiters in einem elektrografischen Druck- oder Kopiergerät (16) verwendet wird,
die bestimmten Lichtcodierwerten zugeordneten Belichtungsenergien des Zeichengenerators abhängig vom Sensorausgangssignal eingestellt werden (Schritt 206),
und wobei vorzugsweise zu bestimmten Sensorausgangssignalen gehörende Grau-Transformationsbeziehungen verwendet werden, die abhängig vom Grauwert, die den Lichtcodierwerten zugeordneten Belichtungsenergien angeben.

14. Einrichtung nach einem der vorhergehenden Ansprüche 9 bis 12, **dadurch gekennzeichnet, dass** bei einem Farbdruck der Farbort des Druckbildträgers mit Hilfe eines Farbsensors erfasst wird (Schritt 102),
dass Mittel vorgesehen sind, durch die Soll-Farbdichten der zu druckenden Farben mittels vorgegebener Farb-Transformationsbeziehungen ermittelt werden, welche den erfassten Farborten Soll-Farbdichten für die beim Druck verwendeten Farbauszüge zuordnen (Schritt 106),
die Transformationsbeziehungen vor dem Druckvorgang empirisch ermittelt werden,
und als analytische Formeln oder als Tabelle in einem Speicher des Druck- bzw. Kopiergeräts (6) gespeichert werden.

15. Einrichtung nach einem der vorhergehenden Ansprüche 9 bis 14, **dadurch gekennzeichnet, dass** die Rauhigkeit der Oberfläche des Druckbildträgers mit einem Rauhigkeitssensor erfasst wird (Schritte 104, 204),
dass abhängig vom Ausgangssignal des Rauhigkeitssensors die auf den Druckbildträger aufzutragende Tonermenge eingestellt wird (Schritte 108, 208), wobei gleichzeitig das Aufladepotential eines beim Druckvorgang mitwirkenden Fotoleiters und das Hilfspotential einer zugeordneten Entwicklungsstation verändert wird.

16. Einrichtung nach Anspruch 15, **dadurch gekennzeichnet, dass** die Druckparameter so verändert werden, dass die Größe der Bildelemente des Druckbildes auf dem Druckbildträger etwa gleich bleibt.

## Claims

1. Method for operating a printing or copying device (6),
wherein at least one optical property of the print image carrier (8) to be printed with a print image is acquired with a sensor (30) (steps 102, 104, 110),
at least one printing parameter is set dependent on the sensor output signal of the sensor (30) (steps 106, 108, 112),
and wherein the print image carrier (8) is printed in a printing operation by using the printing parameter that has been set (step 114),
**characterized in that** the light scatter of the surface of the print image carrier is acquired with the optical sensor (steps 110, 210),
**in that** printing parameters that determine the raster tonal value or the grey scale value and/or the dimensions of fine print details are prescribed dependent on the acquired light scatter (steps 112, 212),
**in that** a raster toner mark is printed onto the print image carrier,
and **in that** light reflected, scattered back in the region of the raster toner mark is acquired with the optical sensor.

2. Method according to claim 1, **characterized in that** the raster toner mark is applied by using printing parameters that had been previously defined dependent on the grey scale value or the colour locus of the print image carrier.

3. Method according to one of the preceding claims 1 to 2, **characterized in that** said method is implemented in an electrophotographic printer.

4. Method according to one of the preceding claims, **characterized in that** the exposure energy of an exposure device for exposing a light-sensitive element, an auxiliary potential in a developer unit for the application of toner particles and/or the charge potential of the light-sensitive element are employed as printing parameters.

5. Method according to one of the preceding claims, **characterized in that** in the case of black-and-white printing with grey levels, the grey scale value of the print image carrier is acquired with the assistance of a brightness sensor (step 202),
**in that** at least one printing parameter that influences the generation of the grey levels is set dependent on the output signal of the grey scale value sensor (step 206),
**in that** a multi-level character generator is employed when exposing a photoconductor in an electrographic printing or copying device (16),
and **in that** the exposure energies of the character generator allocated to specific light-coding values are set dependent on the sensor output signal (step 206),
grey transformation relationships that indicate the exposure energies allocated to the light coding values dependent on the grey scale value being preferably employed, said grey transformation relationships belonging to specific sensor output signals.

6. Method according to one of the preceding claims 1 to 4, **characterized in that** in the case of colour printing, the colour locus of the print image carrier is acquired with the assistance of a colour sensor (step 102),
**in that** the rated colour densities of the colours to be printed are determined with predetermined colour transformation relationships that allocate rated colour densities for the colour separations employed in the printing to the acquired colour loci (step 106),
**in that** the transformation relationships are empirically determined before the printing operation,
and are stored as analytical equations or as a table in a memory of the printing or, respectively, copying device (6).

7. Method according to one of the preceding claims 1 to 6, **characterized in that** the roughness of the surface of the print image carrier is acquired with a roughness sensor (steps 104, 204),
**in that** the toner quantity to be applied onto the print image carrier is set dependent on the output signal of the roughness sensor (steps 108, 208), the charge potential of a photoconductor collaborating in the printing operation and the auxiliary potential of an allocated development station being simultaneously modified.

8. Method according to claim 7, **characterized in that** the printing parameters are modified such that the size of the picture elements of the print image on the print image carrier remains approximately the same.

9. Device for operating an printing or copying device (6),
wherein at least one optical property of the print image carrier (8) to be printed with a print image is acquired with a sensor (30) (steps 102, 104, 110),
at least one printing parameter is set dependent on the sensor output signal of the sensor (30) (steps 106, 108, 112),
and wherein the print image carrier (8) is printed in a printing operation by using the printing parameter that has been set (step 114),
**characterized in that** the light scatter of the surface of the print image carrier is acquired with the optical sensor (steps 110, 210),
**in that** means are provided by which printing parameters that determine the raster tonal value or the grey scale value and/or the dimensions of fine print details are prescribed dependent on the acquired light scatter (steps 112, 212),
**in that** a raster toner mark is printed onto the print image carrier,
the light reflected, scattered back in the region of the raster toner mark being acquired with the optical sensor.

10. Device according to claim 9, **characterized in that** the raster toner mark is applied by using the printing parameters that had been previously defined dependent on the grey scale value or the colour locus of the print image carrier.

11. Device according to one of the preceding claims 9 or 10, **characterized in that** said device can be used in an electrophotographic printer.

12. Device according to one of the preceding claims 9 to 11, **characterized in that** the exposure energy of an exposure device for exposing a light-sensitive element, an auxiliary potential in a developer unit for the application of toner particles and/or the charge potential of the light-sensitive element are employed as printing parameters.

13. Device according to one of the preceding claims 9 to 12, **characterized in that** means are provided by which in the case of a black-and-white printing with grey levels, the grey scale value of the print image carrier is acquired with the assistance of a brightness sensor (step 202),
at least one printing parameter that influences the generation of the grey levels is set dependent on the output signal of the grey scale value sensor (step 206),
a multi-level character generator being employed when exposing a photoconductor in an electrographic printing or copying device (16),
the exposure energies of the character generator allocated to specific light coding values are set dependent on the sensor output signal (step 206),
and grey transformation relationships that indicate the exposure energies allocated to the light coding values dependent on the grey scale value being preferably employed, said grey transformation relationships belonging to specific sensor output signals.

14. Device according to one of the preceding claims 9 to 12, **characterized in that** in the case of a colour printing the colour locus of the print image carrier is acquired with the assistance of a colour sensor (step 102).
**in that** means are provided by which the rated colour densities of the colours to be printed are determined with predetermined colour transformation relationships that allocate rated colour densities for the colour separations employed in the printing to the acquired colour loci (step 106),
the transformation relationships are empirically determined before the printing operation,
and are stored as analytical equations or as a table in a memory of the printing or, respectively copying device (6).

15. Device according to one of the preceding claims 9 to 14, **characterized in that** the roughness of the surface of the print image carrier is acquired with a roughness sensor (steps 104, 204),
**in that** the toner quantity to be applied onto the print image carrier is set dependent on the output signal of the roughness sensor (steps 108, 208), the charge potential of a photoconductor collaborating in the printing operation and the auxiliary potential of an allocated development station being simultaneously modified.

16. Device according to claim 15, **characterized in that** the printing parameters are modified such that the size of the picture elements of the print image on the print image carrier remains approximately the same.

## Revendications

1. Procédé d'exploitation d'un appareil d'impression ou de copie (6), dans lequel
au moins une propriété optique du support d'image d'impression (8), sur lequel doit être imprimée une image d'impression, est détectée par un capteur (30) (Etapes 102, 104, 110),
au moins un paramètre d'impression est réglé en fonction du signal de sortie dudit capteur (Etapes 106, 108, 112),
et le support d'image d'impression (8) est imprimé dans un processus d'impression en utilisant le paramètre d'impression réglé (Etape 114),
**caractérisé en ce que**
la diffusion de la lumière par la surface du support d'image d'impression est détectée par le capteur optique (Etapes 110, 210),
il est prédéterminé, en fonction de la diffusion de la lumière détectée, des paramètres d'impression qui déterminent la teinte tramée ou la valeur de gris et/ou les dimensions d'un détail d'impression fin (Etapes 112, 212),
un repère de toner tramé est imprimé sur le support d'image d'impression,
et la lumière rétro-diffusée et réfléchie dans la région du repère de toner tramé est détectée par le capteur optique.

2. Procédé selon la revendication 1, **caractérisé en ce que** le repère de toner tramé est appliqué en utilisant des paramètres d'impression qui ont été déterminés auparavant en fonction de la valeur de gris ou de la localisation chromatique du support d'image d'impression.

3. Procédé selon l'une des revendications précédentes 1 ou 2, **caractérisé en ce qu'**il est mis en oeuvre dans un appareil d'impression électrophotographique.

4. Procédé selon l'une des revendications précédentes, **caractérisé en ce que** l'énergie d'éclairement d'un dispositif d'éclairement destiné à éclairer un élément photosensible, le potentiel auxiliaire dans une unité de développement destinée à appliquer des particules de toner, et le potentiel de charge de l'élément photosensible, sont utilisés comme paramètres d'impression.

5. Procédé selon l'une des revendications précédentes, **caractérisé en ce que**
dans une impression en noir et blanc avec niveaux de gris, la valeur de gris du support d'image d'impression est détectée à l'aide d'un capteur de luminosité (Etape 202),
au moins un paramètre d'impression influant sur la génération des niveaux de gris est réglé en fonction du signal de sortie du capteur de valeur de gris (Etape 206),
un générateur de caractères multiniveaux est utilisé lors de l'éclairement d'un photoconducteur dans un appareil d'impression ou de copie électrographique (16),
les énergies d'éclairement du générateur de caractères, associées à des valeurs de codage de lumière déterminées, sont réglées en fonction du signal de sortie dudit capteur (Etape 206),
des relations de transformation de gris, qui appartiennent à des signaux de sortie du capteur déterminés, et qui donnent en fonction de la valeur de gris les énergies d'éclairement associées aux valeurs de codage de lumière, étant avantageusement utilisées.

6. Procédé selon l'une des revendications précédentes 1 à 4, **caractérisé en ce que**
lors d'une impression en couleur, la localisation chromatique du support d'image d'impression est détectée à l'aide d'un capteur de couleur (Etape 102),
les densités optiques de couleur théoriques des couleurs à imprimer sont déterminées au moyen de relations de transformation de couleur prédéterminées, lesquelles associent aux localisations chromatiques détectées des densités optiques de couleur théoriques pour les séparations chromatiques utilisées lors de l'impression (Etape 106),
les relations de transformation sont déterminées empiriquement avant le processus d'impression,
et sont mémorisées sous forme de formules analytiques ou de tableaux dans une mémoire de l'appareil d'impression ou de copie (6).

7. Procédé selon l'une des revendications précédentes 1 à 6, **caractérisé en ce que**
la rugosité de la surface du support d'image d'impression est mesurée au moyen d'un capteur de rugosité (Etapes 104, 204),
il est déterminé, en fonction du signal de sortie dudit capteur de rugosité, la quantité de toner à appliquer sur le support d'image d'impression (Etapes 108, 208), le potentiel de charge d'un photoconducteur participant au processus d'impression et le potentiel auxiliaire d'une station de développement associée étant modifiés simultanément.

8. Procédé selon la revendication 7, **caractérisé en ce que** les paramètres d'impression sont modifiés de telle sorte que la taille des éléments d'image sur le support d'image d'impression reste à peu près constante.

9. Dispositif d'exploitation d'un appareil d'impression de copie (6), dans lequel
au moins une propriété optique du support d'image d'impression (8), sur lequel doit être imprimée une image d'impression, est détectée par un capteur (30) (Etapes 102, 104, 110),
au moins un paramètre d'impression est réglé en fonction du signal de sortie dudit capteur (Etapes 106, 108, 112),
et le support d'image d'impression (8) est imprimé dans un processus d'impression en utilisant le paramètre d'impression réglé (Etape 114),
**caractérisé en ce que**
la diffusion de la lumière par la surface du support d'image d'impression est détectée par le capteur optique (Etapes 110, 210),
il est prévu des moyens permettant de prédéterminer, en fonction de la diffusion de la lumière détectée, des paramètres d'impression qui déterminent la teinte tramée ou la valeur de gris et/ou les dimensions d'un détail d'impression fin (Etapes 112, 212),
un repère de toner tramé est imprimé sur le support d'image d'impression,
et la lumière rétro-diffusée et réfléchie dans la région du repère de toner tramé est détectée par le capteur optique.

10. Dispositif selon la revendication 9, **caractérisé en ce que** le repère de toner tramé est appliqué en utilisant des paramètres d'impression qui ont été déterminés auparavant en fonction de la valeur de gris ou de la localisation chromatique du support d'image d'impression.

11. Dispositif selon l'une des revendications précédentes 9 ou 10, **caractérisé en ce qu'**il est mis en oeuvre dans un appareil d'impression électrophotographique.

12. Dispositif selon l'une des revendications précédentes 9 à 11, **caractérisé en ce que** l'énergie d'éclairement d'un dispositif d'éclairement destiné à éclairer un élément photosensible, le potentiel auxiliaire dans une unité de développement destinée à appliquer des particules de toner, et le potentiel de charge de l'élément photosensible, sont utilisés comme paramètres d'impression.

13. Procédé selon l'une des revendications précédentes 9 à 12, **caractérisé en ce que**
il est prévu des moyens permettant de détecter, dans une impression en noir et blanc avec niveaux de gris, la valeur de gris du support d'image d'impression à l'aide d'un capteur de luminosité (Etape 202),
au moins un paramètre d'impression influant sur la génération des niveaux de gris est réglé en fonction du signal de sortie du capteur de valeur de gris (Etape 206),
un générateur de caractères multiniveaux étant utilisé lors de l'éclairement d'un photoconducteur dans un appareil d'impression ou de copie électrographique (16),
les énergies d'éclairement du générateur de caractères, associées à des valeurs de codage de lumière déterminées, étant réglées en fonction du signal de sortie dudit capteur (Etape 206),
et des relations de transformation de gris, qui appartiennent à des signaux de sortie du capteur déterminés, et qui donnent en fonction de la valeur de gris les énergies d'éclairement associées aux valeurs de codage de lumière, étant avantageusement utilisées.

14. Dispositif selon l'une des revendications précédentes 9 à 12, **caractérisé en ce que**
lors d'une impression en couleur, la localisation chromatique du support d'image d'impression est détectée à l'aide d'un capteur de couleur (Etape 102),
il est prévu des moyens permettant de déterminer les densités optiques de couleur théoriques des couleurs à imprimer au moyen de relations de transformation de couleur prédéterminées, lesquelles associent aux localisations chromatiques détectées des densités optiques de couleur théoriques pour les séparations chromatiques utilisées lors de l'impression (Etape 106),
les relations de transformation sont déterminées empiriquement avant le processus d'impression,
et sont mémorisées sous forme de formules analytiques ou de tableaux dans une mémoire de l'appareil d'impression ou de copie (6).

15. Dispositif selon l'une des revendications précédentes 9 à 14, **caractérisé en ce que**
la rugosité de la surface du support d'image d'impression est mesurée au moyen d'un capteur de rugosité (Etapes 104, 204),
il est déterminé, en fonction du signal de sortie dudit capteur de rugosité, la quantité de toner à appliquer sur le support d'image d'impression (Etapes 108, 208), le potentiel de charge d'un photoconducteur participant au processus d'impression, et le potentiel auxiliaire d'une station de développement associée étant modifiés simultanément.

16. Dispositif selon la revendication 15, **caractérisé en ce que** les paramètres d'impression sont modifiés de telle sorte que la taille des éléments d'image sur le support d'image d'impression reste à peu près constante.
